Europäisches Patentamt

European Patent Office

Office européen des brevets

(19)

(11) Publication number: **0 311 428**
**A1**

# EUROPEAN PATENT APPLICATION

(12)

(21) Application number: **88309382.5**

(22) Date of filing: **07.10.88**

(51) Int. Cl.⁴: **C 04 B 37/02**

(30) Priority: **07.10.87 US 106193**

(43) Date of publication of application:
**12.04.89 Bulletin 89/15**

(84) Designated Contracting States: **DE FR GB IT SE**

(71) Applicant: **NORTON COMPANY**
**1 New Bond Street**
**Worcester Massachusetts 01606 (US)**

(72) Inventor: **Miller, Bradley J.**
**290, June Street**
**Worcester Massachusetts (US)**

**Patten, Donald O., Jr.**
**P.O. Box 1336**
**Sterling Massachusetts (US)**

(74) Representative: **Molyneaux, Martyn William et al**
**c/o Ladas & Parry Isartorplatz 5**
**D-8000 Munich 2 (DE)**

(54) Thermally stable joints between materials with different thermal expansion coefficients.

(57) Crack free, large area joints between metals and ceramics, including ceramics such as silicon nitride and silicon carbide with very low coefficients of thermal expansion, can be made by tapering the ceramic (1) in the vicinity of the bond terminus of the joint (2). The degree of taper required can be predicted by finite element analysis of the stresses developed in a hypothetical joint. The joint does not require, but can use if desired, highly ductile intermediate layers.

FIG. 10

**Description**

## THERMALLY STABLE JOINTS BETWEEN MATERIALS WITH DIFFERENT THERMAL EXPANSION COEFFICIENTS.

This invention relates to thermally stable joints between materials with different thermal expansion coefficients wherein there are mechanical load bearing joints between (i) a first material having relatively low tolerance for tensile strain without fracture, strength in compression substantially higher than its modulus of rupture (hereinafter MOR), relatively low fracture toughness (hereinafter denoted "$K_c$"), and a relatively low coefficient of thermal expansion (hereinafter denoted "CTE") and (ii) a second material having a higher CTE and higher $K_c$ than the first material. A typical practically important example would be a joint between a first material of ceramic such as silicon nitride and a metal such as Type 304 stainless steel as the second material. The greater the difference between the CTE's of the two materials in the joint, the greater will be the value of this invention.

Making strong joints between materials as dissimilar as metals and ceramics generally requires high temperature joining methods such brazing or diffusion bonding. When such a joint is cooled to a lower temperature for use or for later manufacturing processes, stresses develop within the joined materials, because the portion of each material nearest the joint is kept from reaching its equilibrium dimension at the lower temperature by the constraint of being joined to another material with a different equilibrium dimension; the bond forces the two joined materials to retain the same dimension along the area of the joint. In the most conventional kind of joint, one with substantially square edges for the joined materials at the bond terminus, the joined material with the lower CTE develops compressive stress in the interior of the joint and tensile stress near the bond terminus of the joint.

Quantification of the stress patterns in a joint can be obtained by the established method of finite element analysis, hereinafter often abbreviated as FEA. A standard reference work for this method is O. C. Zienkiewicz, The Finite Element Method, 3d Ed., McGraw Hill, London, 1977. Computer programs are available commercially for efficient practice of FEA. An example is the ANSYS[tm] program leased by Swanson Analysis Systems, Inc., Houston, Pennsylvania.

FEA involves calculating the mechanical characteristics of actual bodies by a series of approximations, in each of which the actual body is treated as if it were divided by a "mesh" into distinct elements. The behavior of the entire body is then determined by summing the contributions of the individual elements. Such calculations are performed with successively finer mesh sizes until the values either reach a finite value without changing, within a predetermined tolerance limit, as the mesh size is made finer, or else grow ever larger as the mesh size is made finer. The latter behavior is de scribed in the art as "singular" or "a singularity" and the former as convergent or finite.

If a material is made of a high quality single crystal without significant surface damage, or if the material is ductile, as are most metals, its mechanical properties will normally be highly consistent from sample to sample and will be determined by the strength of the chemical bonds in the material. In the more usual case of a brittle polycrystalline material, or even of single crystal material with less than meticulous surface preparation, the MOR will be less precisely reproducible and will be lower on average than for a flawless single crystal of the same nominal chemical composition. The difference arises from microscopic irregularities or flaws present at almost any interface, including the external surface and the numerous internal interfaces in the interior of polycrystalline materials. Brittle materials are known to behave as if rupturing forces were concentrated at flaws rather being uniformly distributed over the entire stressed area of the material.

The stress required to rupture practical nonductile polycrystalline materials often show a wide statistical fluctuation, but for reproducibly prepared materials, fairly consistent failure statistics can be obtained, and they serve as an adequate guide to engineering design with the materials involved. One of the most often used methods of statistically treating the variability of the modulus of rupture is given by W. Weibull, "A Statistical Theory of the Strength of Materials", Ingeniors Handl. (Proceedings of the Royal Swedish Institute for Engineering Research), No. 151, 1939. This method allows calculation of a probability of failure for an object made of a specified material, given the distribution of stresses in the object and certain statistical parameters designated as the Weibull modulus and the characteristic strength of the material.

Metal to ceramic joints with the metal tapered at the bond terminus or edge of the joint have been occasionally used in the prior art, apparently on an empirical basis, but no prior use of ceramic to metal joints With the ceramic tapered at the bond terminus is known to the applicants.

## SUMMARY OF THE INVENTION

It has been found that practically useful joints between (i) a first material having relatively low tolerance for tensile strain without fracture, strength in compression substantially higher than its MOR, relatively low $K_c$, and a relatively low CTE and (ii) a ductile second material having a higher CTE and higher $K_c$ than the first material can be achieved by tapering the first material properly in the region of the bond terminus. The minimum degree of taper necessary can be determined by FEA, which has been applied to show that the maximum tensile stress within the first joined material decreases as the angle that this material makes at the bond terminus with the bond area decreases. The minimum amount of taper required is one which reduces the maximum tensile stress below the average MOR of the first material. By the use of Weibull statistics for the first material together with FEA, the probability of failure can be reduced to any desired, pre-determined practical level if the Weibull parameters of the first material are known and are within a practical range.

The invention is applicable to joints with intermediate layers, such as highly ductile metal layers, as well as to simple joints.

BRIEF DESCRIPTION OF THE THE DRAWINGS

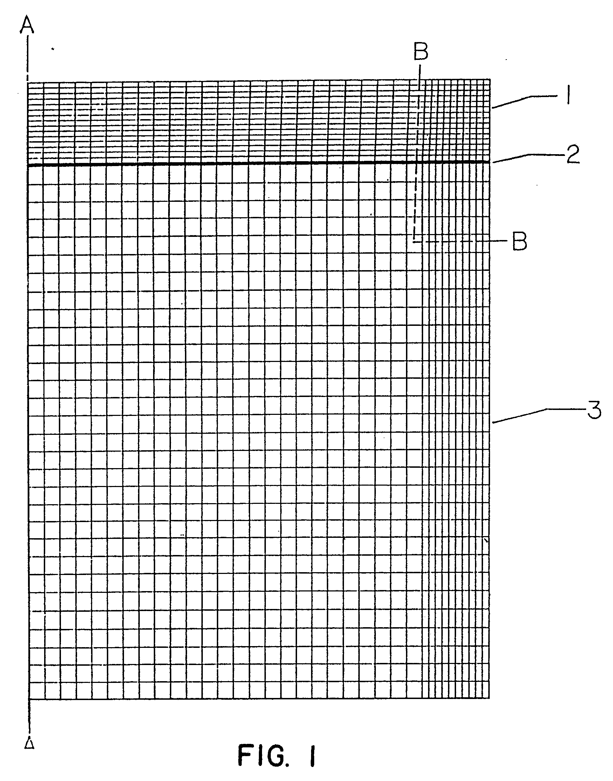

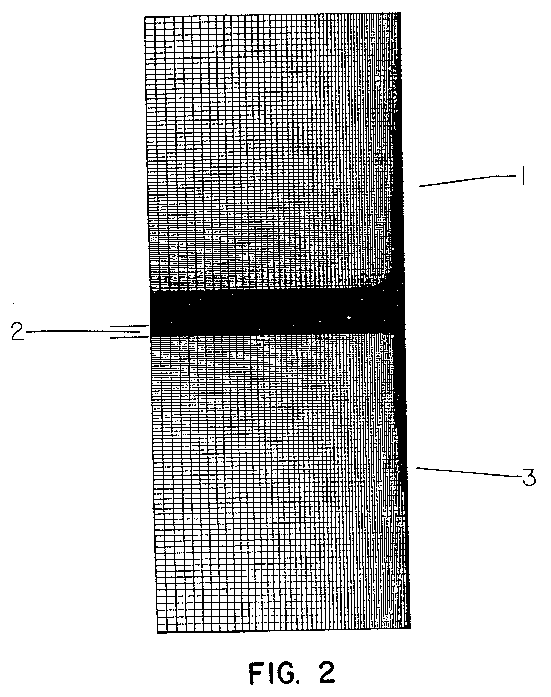

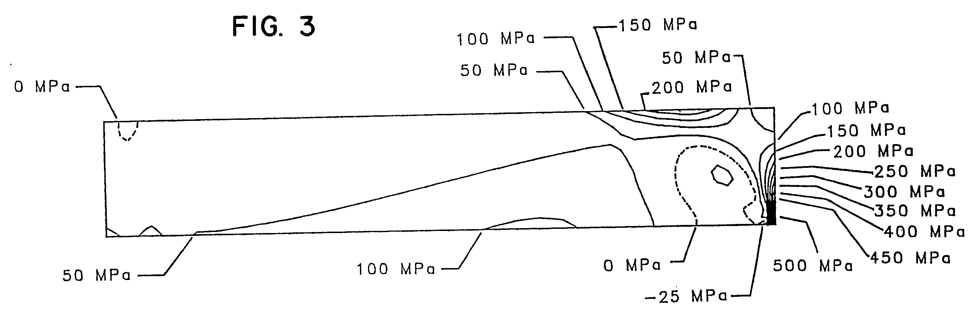

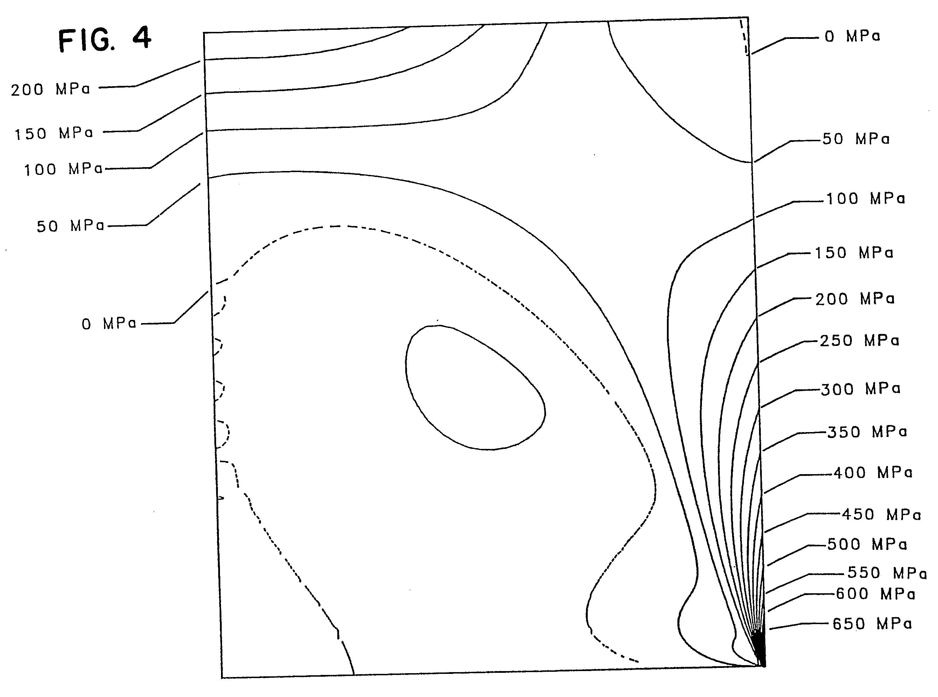

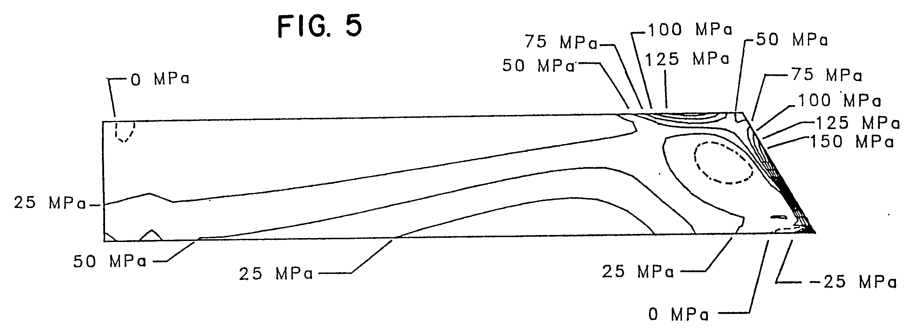

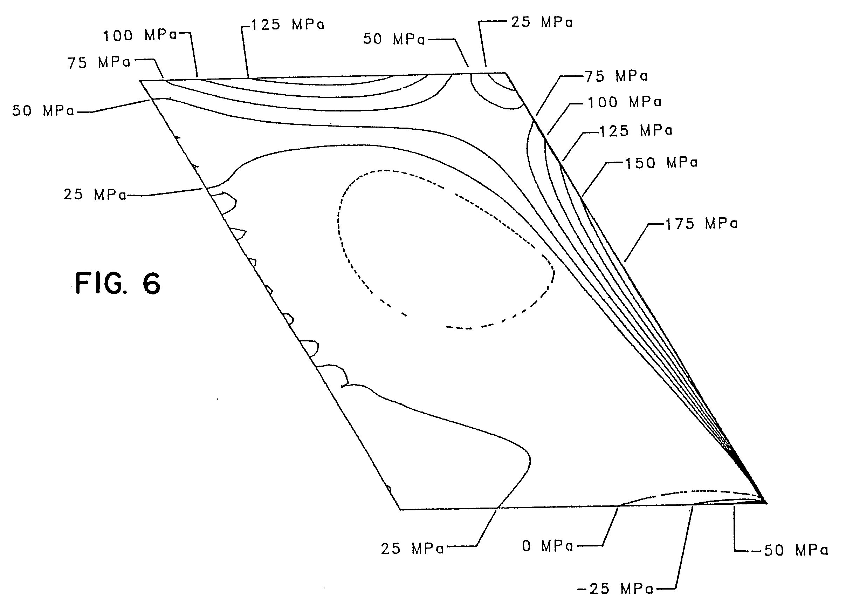

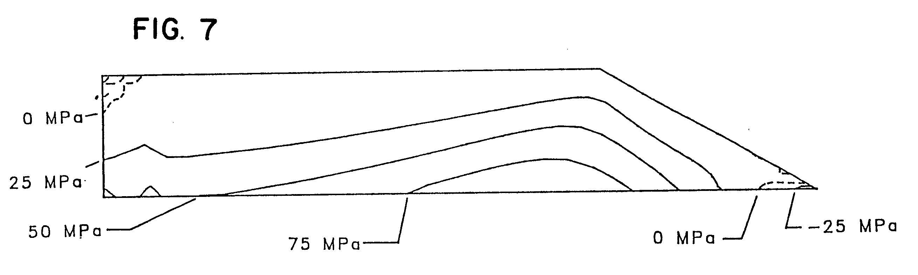

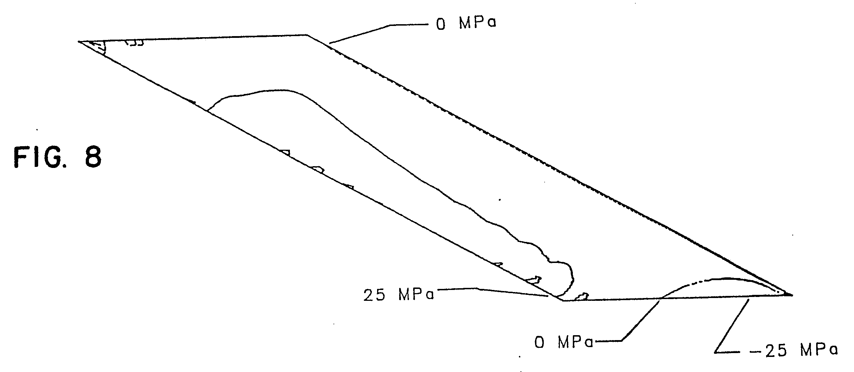

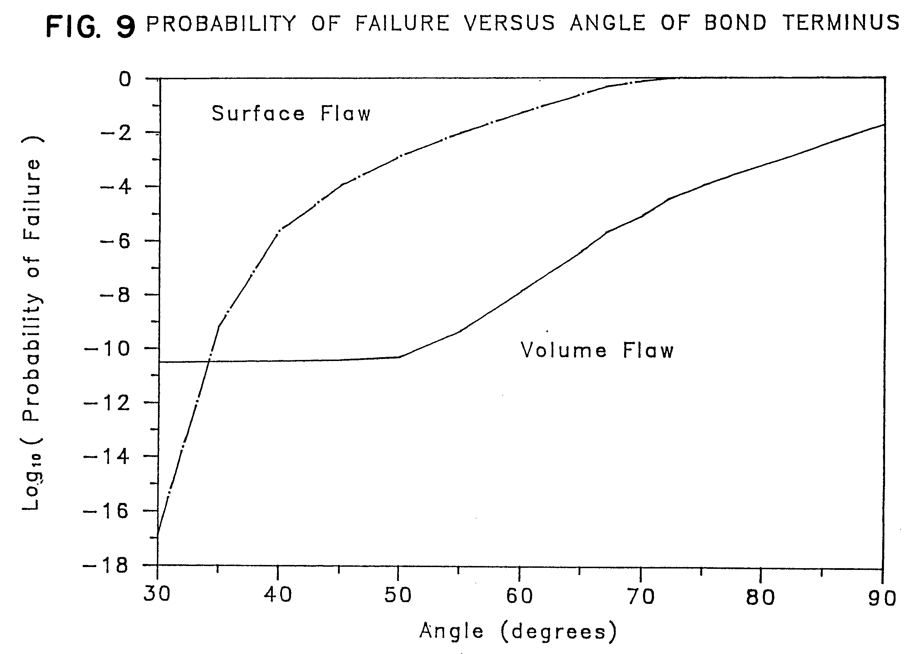

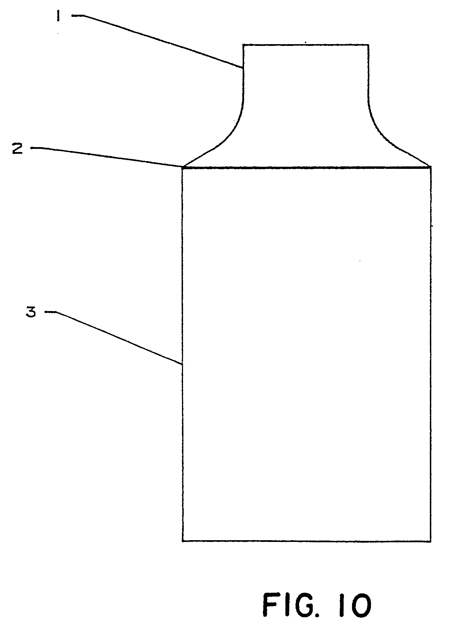

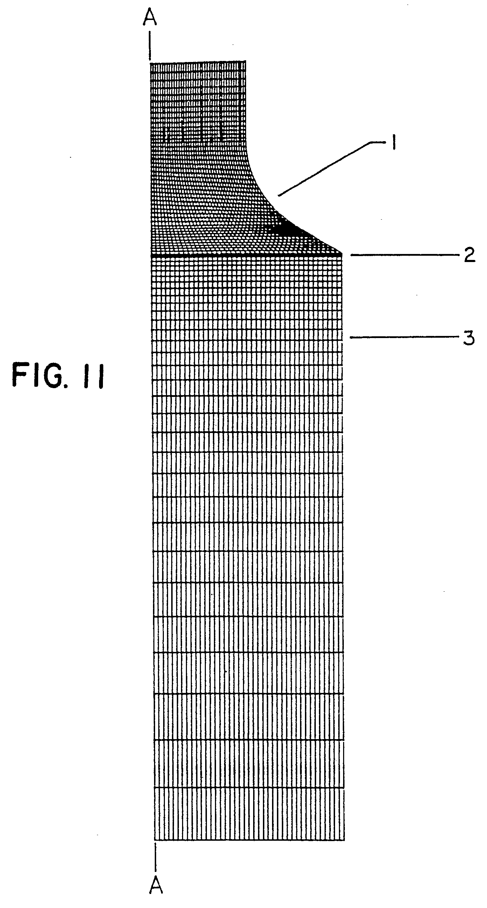

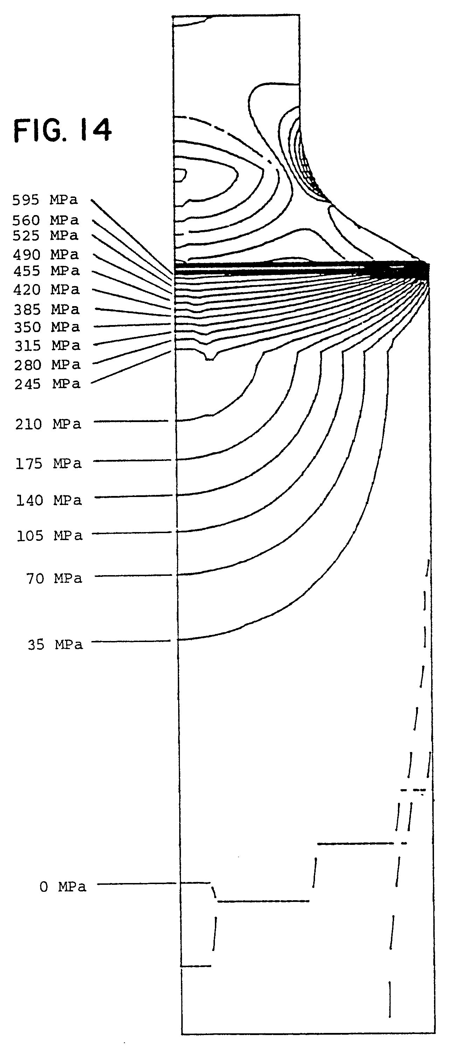

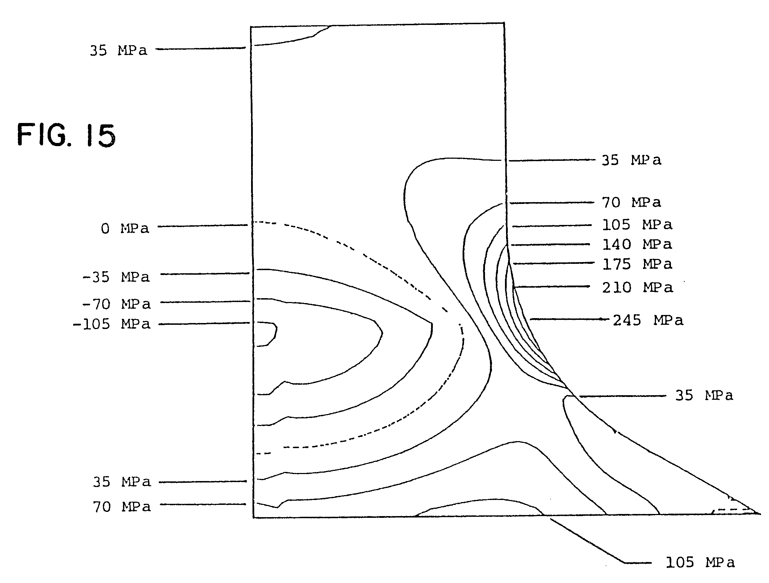

Figures 1 and 2 show the preliminary and part of the final mesh respectively used in calculating, by finite element analysis, the stress in a particular conventional joint with straight edges. Figures 3 and 4 show isostress lines, in material 1 only, from the re sulting calculations, on a smaller and larger scale repectively. Figures 5 and 6 show isostress lines for an otherwise similar joint having a sixty degree taper, and Figures 7 and 8 show the isostress lines for an otherwise similar joint with a thirty degree taper. The probabilities of failure within material 1 for joints with various angles of taper are shown in Figure 9. Figure 10 shows the shape of an appropriate joint according to this invention for joining a long ceramic rod to a larger diameter metal rod. Figures 11-13 show, on increasingly larger scale, the mesh cells used for a FEA calculation of stresses in such a joint, and Figures 14 and 15 show the calculated isostress lines for the metal and ceramic portions respectively.

DESCRIPTION OF THE PREFERRED EMBODIMENTS

The bulk of the description below will be for planar joints, but this should be interpreted as merely illustrative and not considered limitative of the invention. All axisymmetric joints can be treated adequately by considering their planar half cross sections. Any joint geometry can be studied numerically by FEA.

The preferred method of finite element analysis for practice of this invention is the use of Revision 4.3 of the ANSYS$^{tm}$ computer program already noted above, with the assumption of linear displacement fields within the mesh elements.

This invention is particularly applicable to joints between ceramics and metals, and still more particularly applicable to joints between metals and such ceramics as silicon nitride and silicon carbide, which have coefficients of thermal expansion substantially lower than those of any known metal over the temperature range of greatest practical interest, that between room temperature and about 500 C or more. Non-limiting examples of suitable metals include carbon steels, stainless steels, cast iron, aluminum, Kovar, Invar, superalloys, titani um, nickel based alloys, copper, and brazing alloys.

Square edged joints between ordinary metals, such as iron or steel, and these low expansion ceramics almost always crack unless an intermediate layer of a highly compliant metal is used, or unless the ceramic or the metal part of the joint is very thin. Thus, this invention is particularly applicable to joints in which both the joined materials have a thickness of at least one millimeter.

The tendency toward cracking can be readily understood with the aid of FEA and the accompanying figures. Figure 1 shows the preliminary mesh used in an initial trial FEA calculation for a particular joint. The full joint is a cylinder that is axisymmetric around axis A A in this Figure, so that what is shown in the Figure is a half cross section of the actual joint. The axisymmetric nature of the joint assures that the stress in any part of the actual joint will not be higher than the highest value in any such half cross section. In this and all subsequent figures, material 1 is silicon nitride, with an average modulus of rupture of about 810 MPa, a fracture toughness of 3.2 MPa m$^{0.5}$, a Weibull characteristic strength of 947 MPa mm$^{(2/M)}$, where M is the Weibull modulus, for strength limited by surface flaws, a characteristic strength of 983 MPa mm$^{(3/M)}$ for strength limited by volume flaws, and Weibull moduli of 11 for both kinds of failure; material 2 is a braze metal alloy with a composition by weight of 59 % silver, 27 % copper, 13 % indium, and 1 % titanium, a % strain to tensile failure of 1.25 at a strain rate of 0.21 millimeters/meter/sec, a tensile yield strength of 238 MPa at 0.2 % offset, an ultimate tensile strength of 276 MPa, and a Young's modulus of 71 GPa; and material 3 is Type 446 stainless steel.

The preliminary calculation made with the mesh shown in Figure 1 indicated, as expected, that the high est stresses are restricted to the neighborhood of the the two bond termini, between the braze metal and the two primary constituents of the joint to which the braze metal is attached. Attention was therefore concentrated on this region in a more refined calculation.

Figure 2 depicts part of the finer mesh used in a more refined calculation by the same method, for the portion of Figure 1 with its left and lower boundaries along the line B - B of Figure 1. The dark areas of Figure 2 indicate that the mesh defining lines are crowded too close together to resolve on the scale of the figure. The actual mesh size used in this region, as in all the rest of the Figure, is numerically specified as follows:

There are twenty cells of equal height, specifically 0.00508 mm, along each vertical line within the braze layer 2. There are 119 cells in the vertical direction in the silicon nitride layer 1 and 75 cells in the vertical direction in the steel layer 3, but in materials 1 and 3 the cells do not have equal heights. Instead, if the cells in these two materials are numbered with consecutive integers increasing away from the interface, the height $h_{1n}$ in mm of the n'th cell in material 1 is given by the formula $h_{1n} = 0.000446 + 0.00715$, while the cell height $h_{3n}$ in mm of the n'th cell from the interface in material 3 is given by the formula $h_{3n} = 0.000725 \, n + 0.01796$.

The width of the cells of the mesh is the same in all three materials along a vertical line, but the width increases as the distance from the right edge of the Figure increases. If the cells are numbered from right to left, the width $w_m$ in mm of the m'th cell is given by the formula $w_m = 0.00146m + 0.0110$. There are sixty cells across the width of Figure 2.

A major reason for the choice of the dimensions of the mesh cells used in Figure 2 is that the size of the strength controlling flaws in the silicon nitride used in this joint is about 0.025 mm, as determined by conventional fractography on this particular material, and experience has shown that there is little practical value to FEA calculations using mesh sizes less than about one-third of this average flaw size. If the maximum stress calculated using this practical lower limit on the fineness of the mesh is higher than the average strength of the ceramic material in a joint, the ceramic is almost sure to break. If the calculated stress does not exceed this limit, Weibull statistics have been found to be reasonably reliable for calculating failure probabilities, even though theoretically a greater refinement of the mesh might well give a higher calculated stress. Plastic yielding, which occurs to a limited extent even in a ceramic, and/or localized microcracking apparently occur to avoid any breakage that might be theoretically expected from calculations of stress that yield very high stress values only when the mesh size is reduced below about one-third of the size of the average strength controlling flaw size.

Figure 3, which has the same scale as Figure 1, is a plot of the first ten isostress lines, at intervals of 50 MPa, in material 1 only, for a joint at a temperature of 20 C, when the joint was formed initially at 600 C. The zero isostress line(s) in this and subsequent figures are dashed; all other isostress lines are solid. These lines were calculated using the mesh shown in Figure 1, except for the region to the upper right of line B - B, for which the finer mesh partially shown in Figure 2 and numerically specified above was used instead. The isostress lines shown in the Figure are adequate to cover all the actual stresses calculated for the joint, except in the lower right corner, i. e., the bond terminus area, where the isostress lines crowd too close together to label in the Figure. Figure 4 shows isostress lines for the portion of material 1 included within Figure 2 and at the same scale as that figure. On this larger scale, isostress lines up to 650 MPa are shown, but numerical calculations show that the actual stress in the bond terminus region rises to at least 1440 MPa, far over the average tensile strength of the silicon nitride material. Therefore, such joints are expected to, and do, almost always crack.

The FEA for this example, like all of those shown herein unless otherwise noted, is a "worst case" analysis, because it does not take into account the plasticity of the materials in the joint. Therefore, the FEA stress value itself can not guarantee breakage, but the cracking of square edged joints of the type shown in Figure 1 has been amply confirmed by experiment.

Figures 5 and 6 show the isostress lines on the same scale as Figures 3 and 4 respectively, but for joints with an angle of 60 degrees at the bond terminus. The mesh structure used for Figure 5 was the same as shown in Figure 1, except that the rectangles of the mesh of Figure 1 were changed to parallelograms, with horizontal bases and sides at 60 degree angles to the bases, for the calculations that resulted in Figure 5. The vertical heights of the parallelograms of this mesh were the same as the heights of the corresponding rectangles in Figure 1, and the widths of the bases of the parallelograms in the mesh used for Figure 5 were the same as the widths of the bases of the rectangles shown in Figure 1. The mesh used for Figure 6 was made by transforming the rectangles of the mesh shown in Figure 2 and numerically described above into parallelograms by the same principles as used for transforming the rectangles of the mesh in Figure 1 into the mesh of paral lelograms for Figure 5.

Figures 5 and 6 show that the point of maximum stress in a joint with 60 degree taper is still at the bond terminus. Even though the highest isostress line shown in even Figure 6 is for 175 MPa, the lines crowd together in the bond terminus region so quickly that they can not be adequately shown, and numerical calculations give a maximum stress value of 665 MPa. For the reasons already given, further refinement of the mesh size is not practically useful, even though there are indications of singularity at the bond terminus in the calculations. Application of Weibull statistics, using the Weibull modulus of 11 and the characteristic strength (for surface flaws) of 983 MPa mm$^{(2/M)}$, where M is the Weibull modulus, for this silicon nitride material shows that the joint with a 60 degree taper has a 94.8 % probability of survival without a crack in the ceramic.

Figures 7 and 8 show isostress lines on the same scales as Figures 5 and 6 respectively, but for a joint with an angle of 30 degrees at the bond terminus. The mesh used for calculating the isostress lines in these Figures was a mesh of parallelograms as described for Figures 5 and 6 respectively, except that the parallelograms had sides at an angle of 30 degrees to the bases.

For this joint with a 30 degree taper, the maximum stress has decreased to a level of < 100 MPa and is no longer at the bond terminus. Application of Weibull statistics shows that such a joint has a probability of cracking of only 10$^{-6}$. A joint of this type has been made experimentally and found in fact to be free from any cracks visually detectable, even with magnification, on its external surface at room temperature.

Calculations of the same type have been made for several other joint angles, and the results are shown in Figure 9. This shows that failure from surface flaws is virtually certain for angles greater than about 70 degrees, but falls rapidly at lower angles. The probability of failure from volume flaws is never more than about 1 %, but it falls more slowly with increasing taper, until at about 35 degrees it becomes the failure limiting factor. Failure probabilities are below any normal practical interest for joints with such low taper angles.

A joint with the shapes and relative sizes of the three materials shown in Figures 7-8 could serve effectively as a tappet in an engine, with the silicon nitride functioning as a wear resistant cap on the stainless steel.

Joints according to this invention must be tapered on the side of the more brittle material in the vicinity of the joint, but the shape of this material can be varied with more freedom as the distance from the bond area increases. A lower limit on the reliability of a joint between bodies of any shape can be determined by FEA as described above. For many materials it will be satisfactory to use "worst case" FEA, neglecting the effects of plasticity and elasticity of the materials in the joint, but more exact FEA can always be performed if desired. The scope and practice of the invention for joining bodies which do not retain their tapered shape in parts distant from the bond area can be further illustrated from the following additional specific examples.

#### Example 1

Figure 10 shows the overall shape of a different joint containing the same three materials 1, 2, and 3 as in Figure 1. Here the silicon nitride part 1 is tapered in the vicinity of the joint but has a straight part in the region more remote from the joint, connected to the remainder of the silicon nitride by a smoothly curved volume. Such a joint is suitable for a structure in which a narrow diameter rod of silicon nitride is bonded, through an intermediate layer of braze metal, to a larger diameter metal rod.

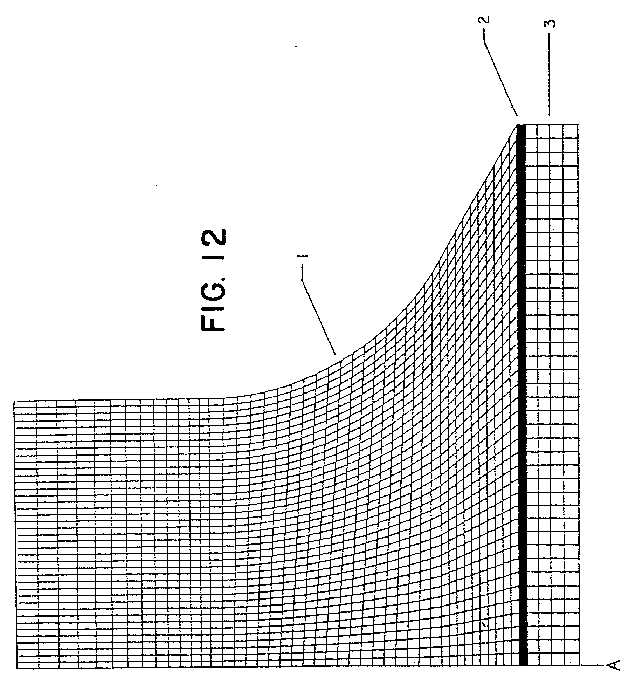

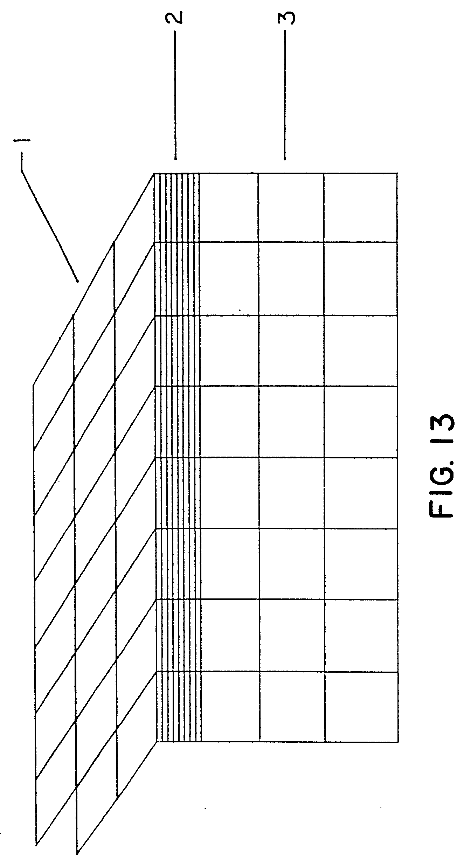

This joint also is axisymmetric; Figure 10 shows a full cross section, but the remaining figures, depicting the same joint, show only half sections or parts of half sections. Figure 11 shows the mesh used for calculations on a half section of this joint with a straight extension. Figure 12 shows the detail of the mesh used in the critical area near the bond terminus, on a larger scale than Figure 11, and Figure 13 shows the mesh in the most critical part of the mesh near the bond terminus on a still larger scale than Figure 12; it may be noted in Figure 12 that the braze metal part 2 of the joint has eight mesh cells across its thickness, although the cells are so crowded on the scale of Figure 11, and even Figure 12, that they appear as a narrow solid shaded area.

Figure 14 shows the isostress lines in the metal portion of the joint. Although these stresses are high, the metal is able easily to accommodate them without fracture, by ductile yielding when necessary. Figure 15 shows the isostress lines, at 35 MPa intervals, in the silicon nitride part 1 of the joint shown in Figures 1014. The region of highest stress in the ceramic part of this structure is within the curve along which the tapered section blends with the straight part of the ceramic rod. The largest tensile stress value is finite and well within the allowable stress limits for the silicon nitride. A failure probability of only about $6 \times 10^{-4}$ is predicted for this structure by Weibull statistics .

#### Example 2

A structure suitable for shaft attachment and including a joint, over 12 mm in diameter, made according to this invention between silicon nitride and the same braze metal as described above was tested for total adhesion of the joint. The joint survived a tensile stress of 25 megapascals at room temperature without any evidence of damage. This is believed by the applicants to be the highest value ever achieved for such a large butt joint between these two materials, without using an intermediate layer at least 0.25 mm thick of a highly ductile metal such as copper or gold.

#### (End of Example 2)

As with other kinds of joints, it is often necessary or advantageous to use as part of joints according to this invention one or more relatively thin intermediate layers of material other than the two primary materials to be joined. In the very common situation where the two primary materials have little or no tendency to adhere to each other, an intermediate adhesive layer obviously must be used. Even if an intermediate layer is not strictly necessary, it is often advantageous to use one with greater elastic or plastic compliance than either of the materials to be joined. This permits accommodation of some strains that otherwise might exist in the joint by stretching or compressing the compliant intermediate layer. A practical lower limit on compliance is set by the mechanical stress which the joint is required to transmit and by the degree of stiffness needed in the joint for the service required of it, according to conventional principles well known to those skilled in the art.

If a compliant, or any other, intermediate layer is used, the presence of this material must be taken into account in the FEA used to determine an appropriate taper for the joint in question for the purposes of this invention. Several examples of joints with such a layer have been given above. The presence of a compliant intermediate layer will usually decrease the amount of taper needed or will increase the bond strength at a given taper.

The term "taper" as used herein is intended only to define a zone outside which none of the first material in the type of joint described herein should extend. It is not necessary that the first material be shaped along a linear path as illustrated in the drawing figures herein, but only that the surface of this first material should lie inside the zone defined by the lines similar to the taper lines in these figures, at whatever angle of taper is needed to lower the probability of failure below the desired tolerance level.

**Claims**

1. A thermally stable joint which exists between and comprises (a) a first material having (i) a first coefficient of thermal expansion (CTE), (ii) a first fracture toughness ($K_c$), (iii) a first modulus of rupture, and (iv) a first compressive strength that is greater than said first modulus of rupture, and (b) a second material having (i) a second CTE that is greater than said first CTE and (ii) a second $K_c$ that is greater than said first $K_c$, said joint being intended for service at a predetermined temperature different from the temperature at which said joint is formed, characterized by the fact that said first material is tapered sufficiently in the vicinity of the bonded area and is shaped in the part of said first material remote from the vicinity of the bonded area so that the maximum tensile stress predicted within any part of said first material by finite element analysis at said predetermined temperature does not exceed the modulus of rupture of said first material at said predetermined temperature.

2. A joint according to claim 1, wherein Weibull moduli and Weibull characteristic strengths of said first material for failure by surface and by volume flaws are known and wherein a number less than 0.6 but greater than zero is selected as the acceptable probability of failure for the joint, wherein said first material is tapered sufficiently in the vicinity of the bonded area and is shaped in the part of said first material remote from the vicinity of the bonded area so that the tensile stresses predicted within said first material at said predetermined temperature by finite element analysis, together with said Weibull moduli and said Weibull characteristic strengths, yields a calculated probability of failure for the joint that is not greater than said acceptable probability.

3. A joint according to claim 1 or 2, wherein said first material has a coefficient of thermal expansion between the joint formation temperature and said preselected temperature of not more than $5 \times 10^{-6}$/degree C and said second material has a coefficient of thermal expansion between the joint formation temperature and said preselected temperature of not less than $10 \times 10^{-6}$/degree C.

4. A joint according to any one of the preceding claims, wherein said first material is predominantly silicon carbide, silicon nitride, or a mixture thereof and said second material is a metal or alloy.

5. A joint according to any one of the preceding claims, wherein said joint has a tensile strength per unit area of joint of at least 20 MPa and said first material has a thickness perpendicular to said joint of at least one millimeter in at least a part of its area.

6. A joint according to any one of claims 1-5, in which the first material is adhered over a fixed area to the second material.

7. A joint according to any one of claims 1-5, wherein the joint is formed by joining each of said first and said second materials to a third material having a compliance greater than either of said first and said second materials and being intended for service at a pre-determined temperature different from the temperature at which said joint is formed.

FIG. 1

FIG. 2

FIG. 3

FIG. 4

200 MPa
150 MPa
100 MPa
50 MPa
0 MPa

0 MPa
50 MPa
100 MPa
150 MPa
200 MPa
250 MPa
300 MPa
350 MPa
400 MPa
450 MPa
500 MPa
550 MPa
600 MPa
650 MPa

FIG. 5

EP 0 311 428 A1

FIG. 6

# FIG. 7

0 MPa

25 MPa

50 MPa

75 MPa

0 MPa

−25 MPa

EP 0 311 428 A1

FIG. 8

FIG. 9 PROBABILITY OF FAILURE VERSUS ANGLE OF BOND TERMINUS

EP 0 311 428 A1

FIG. 10

A

FIG. II

1

2

3

A

FIG. 12

FIG. 13

FIG. 14

595 MPa
560 MPa
525 MPa
490 MPa
455 MPa
420 MPa
385 MPa
350 MPa
315 MPa
280 MPa
245 MPa

210 MPa

175 MPa

140 MPa

105 MPa

70 MPa

35 MPa

0 MPa

FIG. 15

35 MPa

35 MPa
70 MPa
0 MPa
105 MPa
140 MPa
175 MPa
-35 MPa
210 MPa
-70 MPa
-105 MPa
245 MPa

35 MPa

35 MPa
70 MPa

105 MPa

EP 0 311 428 A1

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 232 603  (NGK INSULATORS, LTD) * Claims 1,3,6,8,9,11,12; figure 1c; column 5, paragraph 1 * | 1-7 | C 04 B   37/02 |
| A | CHEMICAL ABSTRACTS, vol. 103, no. 18, 4th November 1985, page 271, abstract no. 146220p, Columbus, Ohio, US; & JP-A-60 82 267 (NISSAN MOTOR CO., LTD) 10-05-1985 * Abstract; figures 3-9 * | 1-7 | |
| A | CHEMICAL ABSTRACTS, vol. 107, no. 8, 24th August 1987, page 277, abstract no. 63502p, Columbus, Ohio, US; A. KAWASAKI et al.: "Finite element analysis of thermal stress of the metal/ceramic multi-layer composites with controlled compositional gradients", & NIPPON KINZOKU GAKKAISHI 1987, 51(6), 525-9 | 1 | |
| A | US-A-4 610 934  (W.D.G. BOECKLER et al.) * Claim 3 * | 7 | TECHNICAL FIELDS SEARCHED (Int. Cl.4)  C 04 B   37/00 F 01 D    5/00 F 02 F    7/00 F 16 D    1/00 |

The present search report has been drawn up for all claims

| Place of search | Date of completion of the search | Examiner |
|---|---|---|
| THE HAGUE | 11-01-1989 | HAUCK, H.N. |

EPO FORM 1503 03.82 (P0401)